# EUROPEAN PATENT APPLICATION

(11) **EP 1 878 965 A1**
(43) Date of publication of application: **16.01.2008**
(21) Application number: 06012963.2
(22) Date of filing: 23.06.2006
(51) Int. Cl.: F21K 2/00, G09F 13/20, F21K 7/00, F21S 19/00, F21V 9/16

(54) **Outdoor lamp with luminescence efficiency**

(71) Applicant: Kao, Kuang-Hung, Taipei (TW)
(72) Inventor: Kao, Kuang-Hung, Taipei (TW)
(74) Representative: Negrini, Elena

(57) **Abstract**

The present invention provides an outdoor lamp having at least one lighting unit which can be powered by a solar energy battery unit electrically connected to each of the at least one lighting unit. Each lighting unit has a base, at least one light emitting diode (LED) on the base. A transparent cover is mounted on the base and partially coated or mixed with luminescent material. By using the solar energy battery unit and the LED, the lamp is economical and efficient in use. Moreover, the luminescent material keeps the lamp on lighting after the solar energy battery unit is exhausted.

## Description

### FIELD OF THE INVENTION

The present invention relates to a lamp, and more particularly to an outdoor lamp that has a luminescence function for lighting.

### DESCRIPTION OF THE PRIOR ART

Conventional outdoor lamp is mostly operated by electrical energy that is presently provided by fossil fuels burning or nuclear power either generating pollutants to our environments. Moreover, the conventional outdoor lamp contains light bulbs used thereon and generating light and inevitable thermal energy. The thermal energy causes high temperature that is unfavorable to the light bulb because the high temperature certainly shortens the lifetime of the light bulb and results in energy waste so that cost of bulb replacement and energy supply is increased correspondingly.

Some conventional solar energy lamps have been known to have a battery that is charged up during daylight hours by solar radiation and which provide light at night in gardens and open spaces when required. Generally speaking, the conventional outdoor lamp does not have long lighting duration and the brightness is relative low that may be not satisfactory for special lightness requirement such as security purposes in spacious areas.

### SUMMARY OF THE INVENTION

To the drawbacks of the conventional outdoor lamp and the conventional solar energy lamp, an improved outdoor lamp is provided in the present invention to eliminate or obviate the drawbacks.

A main objective of the present invention is to provide an outdoor lamp that not only is environmentally friendly but also has excellent lighting efficiency.

Another main objective of the present invention is to provide an outdoor solar energy lamp that has long lighting duration and lifespan.

To achieve the foregoing objectives, the outdoor lamp comprises at least one lighting unit, wherein each of the at least one lighting unit ha s a base with at lest one light emitting diode (LED); and a transparent cover mounted on the base to cover the at least one LED and luminescent material that illuminates without exterior energy.
For having longer illumination time the outdoor lamp of the present invention as described above may further comprise a solar energy battery unit electrically connected to the at least one LED by a wire. The solar energy battery unit turns solar energy into electric energy, stores electric energy and provides the electric energy to the at least one LED. Furthermore, the transparent cover can be made of glass and the luminescent material is partially coated on a surface of the transparent cover or distributed in the glass.

By having the solar energy battery unit, LED and the luminescent material, the lamp is enabled to have longer illumination time.

To facilitate understanding the purpose of the present invention and its characteristics and effects, a specific embodiment of the present invention is described in detail as follows according to the figures.

### BRIEF DESCRIPTION OF THE FIGURES

Fig. 1 shows a preferred embodiment of the outdoor lamp with luminescence efficiency in the present invention.
Fig. 2 is a perspective view of a first embodiment of an outdoor lamp in accordance with the present invention;
Fig. 3 is an operational perspective view of the first embodiment of the outdoor lamp in Fig. 2;
Fig. 4 is a perspective view of a second embodiment of the outdoor lamp in accordance with the present invention; and
Fig. 5 is a perspective view of a third embodiment of the outdoor lamp in accordance with the present invention.

### DETAILED DESCRIPTION OF THE INVENTION

An outdoor lamp with luminescence efficiency in accordance with the present invention comprises at least one lighting unit and preferably a solar energy battery unit electrically connected to the at least one lighting unit. Each lighting unit has a base, at least one light emitting diode (LED) on the base and a transparent cover mounted on the base and partially coated with luminescent material. By using the solar energy battery unit and the LED, the lamp is economical and efficient in use. Moreover, the luminescent material keeps the lamp on lighting after the solar energy battery unit is exhausted.

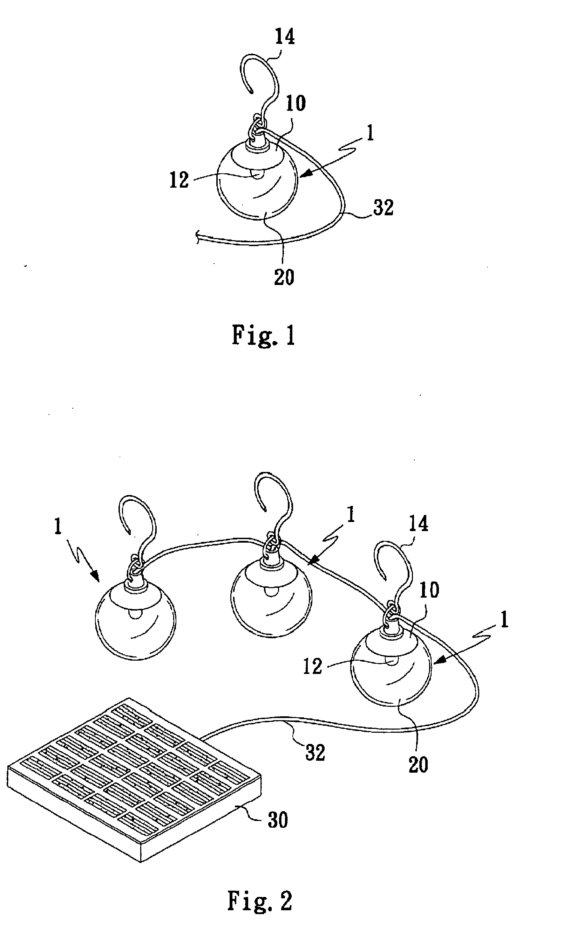

Fig. 1 shows a preferred embodiment of the outdoor lamp with luminescence efficiency in the present invention. As shown in Fig. 1, the outdoor lamp with luminescence efficiency of the present invention comprises a lighting unit 1 which has a base 10, a LED 12 with a wire 32 for connecting to power supply (not shown), an optional hook 14 and a transparent cover 20 with luminescent material.

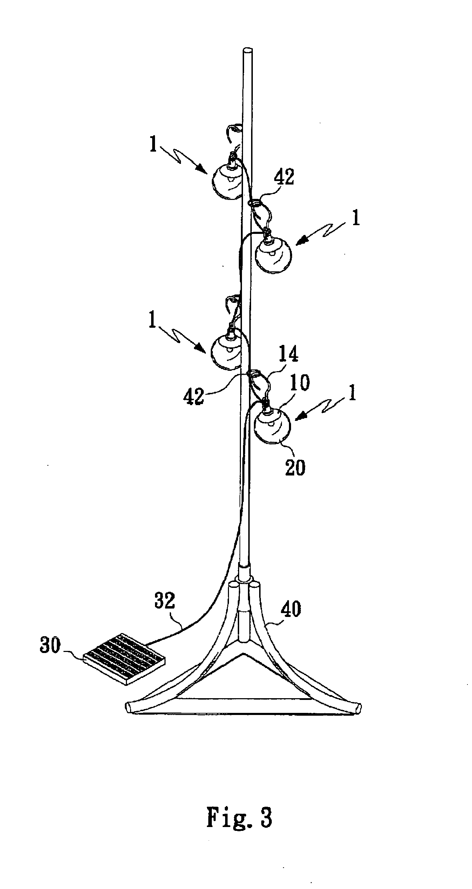

With reference to Figs. 2 and 3, another preferred embodiment of the outdoor lamp with luminescence efficiency in the present invention comprises multiple lighting units 1 and a solar energy battery unit 40. Each lighting unit 1 has a base 10, an LED 12, an optional hook 14 and a transparent cover 20 with luminescent material.

The base 10 is dish-shaped and has a flat side, a tapered side, and a protrusion attached to the tapered side. The LED 12 is attached to the flat side of the base 10 and the hook 14 is engaged the protrusion on the base 10.

The transparent cover 20 is spherical and hermetically attached to the base 10 to prevent the LED 12 from dust and moisture. The transparent cover 20 is coated with a thin layer of the luminescent material on an inner periphery or an outer periphery thereof, wherein the thin layer of the luminescent material still allow light emitting through the coated transparent cover 20. The luminescent material absorbs light energy from solar radiation in daylight or the LED emission and releases the luminescence when the solar energy battery unit 30 is exhausted at night. Selectively, the transparent cover 20 is partially coated with the luminescent material in different patterns to create versatile lighting pictures at night.

The solar energy battery unit 30 is electrically connected to the multiple lighting units 1 by a wire 32. The solar energy battery unit 30 collects and saves the solar energy from the sunlight and provides the solar energy to the at least one lighting unit 1 to generate light at night.

When the outdoor lamp is in use, as shown in Fig. 3, the multiple lighting units 1 can be attached to a stand 40 with multiple rings 42 by respectively attaching the hooks 14 to the rings 42 on the stand 40.

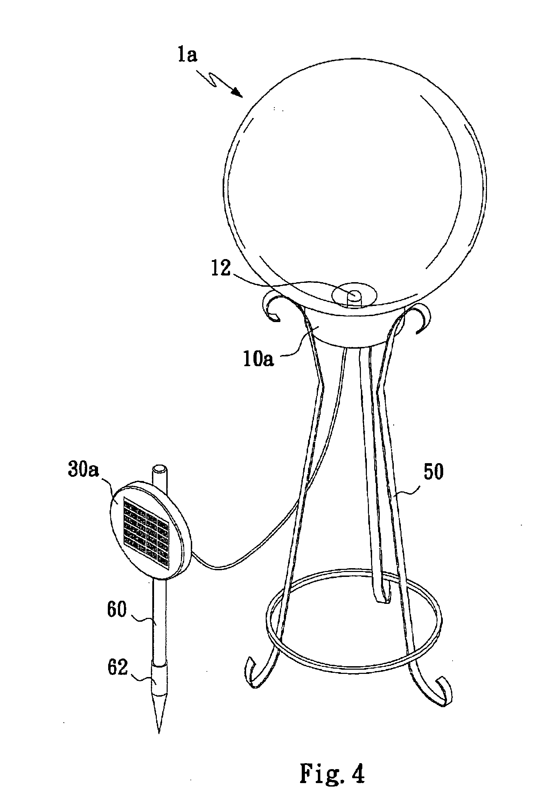

With reference to Fig. 4, another preferred embodiment of the outdoor lamp is shown, wherein the lighting unit 1a has an enlarged base 10a and a tripod supporting rack 50 for holding the enlarged base 10a. Moreover, the solar energy battery unit 30a is combined to a stick 60 with a sharp head 62 to upraise the battery unit 30a and to conveniently attach to the ground.

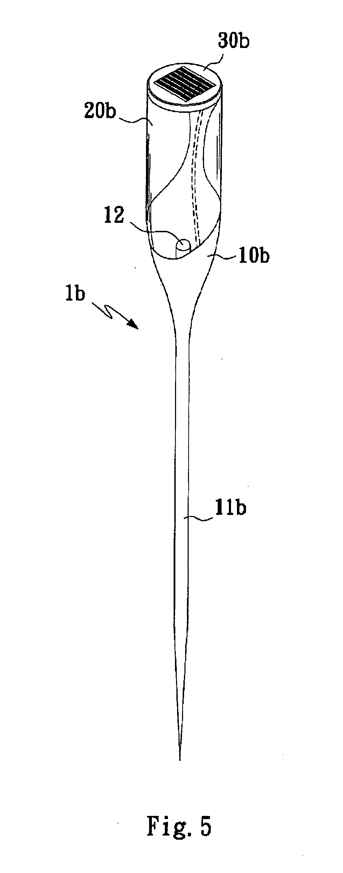

With reference to Fig. 5, still another preferred embodiment of the outdoor lamp is shown, wherein the lighting unit 1b is further modified by having a stick-shaped base 10b. The stick-shaped base 10b has an enlarged top end with the LED 12 and a sharp bottom end 11b. The transparent cover 20b is tubular and mounted on the enlarged top end. The solar energy battery unit 30b is mounted on a top of the transparent cover 20b.

According to the foregoing description, the outdoor lamp of the present invention has the following advantages:
1. By turning the sunlight energy into the electric energy, the lamp makes use of the electric energy so that it costs no money for energy and can reduce the operational cost. Moreover, the solar energy is environmentally friendly to the earth.
2. The LED has excellent lighting efficiency, low energy consumption, and long longevity because the temperature of the LED is low. Therefore, the lamp is economical in use.
3. Every embodiment of the outdoor lamp can be conveniently constructed to utilize by means of hooks, stands or sticks.
4. The luminescent material enables the lamp to keep on lighting after the solar energy battery unit is exhausted so that lighting duration of the lamp is prolonged.

The present invention has been described with a preferred embodiment thereof and it is understood that many changes and modifications in the described embodiment can be carried out without departing from the scope and the spirit of the invention as defined by the appended claims.

## Claims

1. An outdoor lamp with luminescence efficiency, the outdoor lamp comprises
at least one lighting unit, wherein each of the at least one lighting unit has a base with at lest one light emitting diode (LED); and a transparent cover mounted on the base to cover the at least one LED; wherein the transparent cover contains luminescent material that illuminates without exterior energy supply.

2. The outdoor lamp as claimed in claim 1, further comprising a solar energy battery unit which is electrically connected to the at least one LED, wherein the solar energy battery unit turns solar energy into electric energy, stores the electric energy and provides electric energy to the at least one LED.

3. The outdoor lamp as claimed in claim 1, wherein the base is dish-shaped and has a flat side, a tapered side, and a protrusion attached to the tapered side, the at least one LED is attached to the flat side of the base; and the base further has a hook engaged with the protrusion on the base.

4. The outdoor lamp as claimed in claim 3, wherein the outdoor lamp further comprises a stand with at least one ring; and the hook on the base correspondingly engages one of the at least one ring on the stand.

5. The outdoor lamp as claimed in claim 2, wherein the outdoor lamp comprises:
one lighting unit;
a supporting rack holding the lighting unit; and
a stick with a sharp head combined with the solar energy battery unit.

6. The outdoor lamp as claimed in claim 2, wherein the base is stick-shaped and has a sharp bottom end and an enlarged top end with the at least one LED;
the transparent cover is tubular and mounted on the enlarged top end of the base; and
the solar energy battery unit is mounted on a top of the transparent cover.

7. The outdoor lamp as claimed in claim 1, wherein the transparent cover is made of glass and the luminescent material is partially coated on a surface of the transparent cover or distributed in the glass.
